# EUROPÄISCHE PATENTSCHRIFT

(11) **EP 1 541 609 B1**
(45) Veröffentlichungstag und Bekanntmachung des Hinweises auf die Patenterteilung: **03.03.2010**
(21) Anmeldenummer: 04028096.8
(22) Anmeldetag: 26.11.2004
(51) Int. Cl.: C08G 18/81, C09D 175/16, C08J 3/24, C08G 18/67

(54) **Härter**
Curing agent
Durcisseur

(30) Priorität: 09.12.2003 DE 10357712
(43) Veröffentlichungstag der Anmeldung: 15.06.2005
(73) Patentinhaber: Bayer MaterialScience AG, 51368 Leverkusen (DE)
(72) Erfinder: Fischer, Wolfgang, Dr., 40668 Meerbusch (DE); Mechtel, Markus, Dr., 51467 Bergisch Gladbach (DE); Weikard, Jan, Dr., 51519 Odenthal (DE)

(56) Entgegenhaltungen:
- DE-A1- 19 860 041
- DE-A1- 19 919 826
- US-A- 4 879 402
- US-A- 5 008 436

## Beschreibung

Die vorliegende Erfindung betrifft ein neues Verfahren zur Herstellung von Dual Cure-Härtern .

Die erfindungsgemäß erhältlichen Dual Cure-Härter entstehen durch Umsetzung von bestimmten Hydroxyalkyl(meth)acrylaten mit Polyisocyanaten. (Meth)acrylate sind im Sinne der vorliegenden Erfindung Ester der Acrylsäure oder der Methacrylsäure und deren Mischungen. Hydroxyalkyl(meth)acrylate werden unter anderem für die Herstellung von Härtern für Zwei- oder Mehrkomponentenbeschichtungssysteme verwendet, die durch radikalische Polymerisation und Additionsreaktion von Isocyanaten mit geeigneten Reaktionspartnern aushärten. Die radikalische Polymerisation kann dabei durch aktinische Strahlung ausgelöst werden. Die Kombination von Härtung durch zwei Reaktionsmechanismen wird vom Fachmann als "Dual Cure" bezeichnet.

Vorteilhafte Dual Cure-Systeme enthalten Moleküle, die sowohl über eine oder mehrere Isocyanatgruppen und mindestens eine radikalisch polymerisierbare Doppelbindung verfügen. Solche Moleküle werden vom Fachmann als Dual Cure-Härter bezeichnet. Die Herstellung solcher Härter erfolgt zumeist durch Umsetzung von Polyisocyanaten mit Hydroxyalkyl(meth)acrylaten. Um besonders hochvernetzte Beschichtungen zu erhalten ist es zweckmäßig, Härter mit hoher Funktionalität insbesondere an radikalisch polymerisierbaren Doppelbindungen zu verwenden, die sich vorteilhaft durch Verwendung von Hydroxyalkyl(meth)acrylaten hoher Funktionalität an Acrylatund/oder Methacrylatgruppen herstellen lassen. Um einen gezielten Molekülaufbau des Dual Cure-Härters zu erreichen, ist es weiterhin zweckmäßig, Hydroxyalkyl(meth)acrylate zu verwenden, deren Hydroxyfunktionalität möglichst eng verteilt ist und nahe bei eins liegt. Durch diesen gezielten Molekülaufbau ist es möglich, u.a. Härter bereitzustellen, die sich durch eine niedrige Viskosität auszeichnen. Daher ist die Herstellung der Hydroxyalkyl(meth)acrylate durch Veresterung von Polyolen wie Trimethylopropan oder Pentaerythrit mit (Meth)acrylsäure als statistisch ablaufendem Prozess, der eine breitere Verteilung der Hydroxyfunktionalität erzeugt, nachteilig. Weiterhin bilden sich häufig Nebenprodukte höheren Molekulargewichts, die z.B. in Analytical Sciences, Nov. 2001, Vol. 17, S. 1295-1299, als Additionsprodukte von Hydroxylgruppen an die C-C-Doppelbindungen von Acrylaten indentifiziert wurden.

In DE-A 19 860 041 wird 3-Acryloyloxy-2-hydroxypropyl-methacrylat als mögliche Verbindung für eine Reaktion mit Polyisocyanaten zur Herstellung von Dual Cure-Härtern offenbart. Diese werden durch katalysierte Allophanatisierung mit einem Überschuss an Hexamethylendiisocyanat (HDI) und anschließender Destillation des HDI-Überschusses hergestellt. Die Destillation von HDI in Gegenwart von Acrylat- oder Methacrylatgruppen ist jedoch wegen der Gefahr einer spontanen Polymerisation sehr kritisch und technisch - wenn überhaupt möglich - mit sehr hohem Aufwand verbunden und daher unökonomisch. Zur Herstellung, zur Reinigung oder zur erforderlichen Reinheit oder zur Bezugsquelle von 3-Acryloyloxy-2-hydroxypropyl-methacrylat werden in dieser Schrift keinerlei Aussagen gemacht.

Die US-A-4879402 und die US-A-5008436 beschreiben die Verwendung von Methacryloyloxy-2-hydroxypropyl-methacrylat zur Herstellung von Urethangruppen-haltigen, bzw. Harnstoffgruppenhaltigen Acrylatderivaten. Die Produkte werden jeweils zur Herstellung von Dentalmassen eingesetzt. Die DE-A-19919826 beschreibt die Herstellung von Polyurethanschaumstoffen unter Verwendung von 3-Acryloyloxy-2-hydroxypropyl-methacrylat. Dual-Cure-Systeme werden in keinem der genannten Dokumente beschrieben. Zur Reinheit der verwendeten Acrylatkomponenten wird auch in diesen Schriften keinerlei Aussage gemacht.

Allgemein ist in der Literatur die Herstellung von 3-Acryloyloxy-2-hydroxypropyl-methacrylat durch Umsetzung von Glycidylmethacrylat mit Acrylsäure, beide in hoher Reinheit kommerziell erhältlich, unter geeigneter Katalyse beschrieben. Angaben zur Reinigung/Reinheit des Produkts werden nicht gemacht. So beschreibt die EP-A 0 900 778 die Reaktion von überschüssiger Acrylsäure nach Veresterungsreaktionen mit Glycidylmethacrylat unter Katalyse von Benzyltriethylammoniumchlorid. 3-Acryloyloxy-2-hydroxypropyl-methacrylät ist zwar kommerziell im Feinchemikalienhandel (Fa. Sigma-Aldrich GmbH, Steinheim, DE) erhältlich, die Reinheit nach Gelpermeationschromatograpie ist jedoch unter 50 Gew.-%, insbesondere werden unerwünschte höhermolekulare Anteile in dem Produkt gefunden. Das Herstellverfahren ist nicht bekannt. Bei der Umsetzung sowohl des kommerziell erhältlichen als auch des durch Benzyltriethylammoniumchlorid-Katalyse hergestellten Produkts mit Polyisocyanaten zu Dual Cure-Härtern entstanden unerwarteterweise keine stabilen Produkte (siehe Vergleichsbeispiele V1 und V3).

3-Methacryloyloxy-2-hydroxypropyl-methacrylat wird nach destillativer Reinigung mit einer Reinheit größer 85 Gew.-% von der Fa. Röhm, Darmstadt, DE vertrieben. Die Stabilität des Produkts ist gering, das Produkt muss gekühlt gelagert werden, eine Verwendung im industriellen Maßstab ist daher erschwert. Die Stabilität von Umsetzungsprodukten dieses 3-Methacryloyloxy-2-hydroxypropyl-methacrylats mit Polyisocyanaten zu Dual Cure-Härtern ist sehr gering (siehe Vergleichsbeispiel V 12).

Es bestand daher die Aufgabe, ein Verfahren bereitzustellen, mit dem lagerstabile Umsetzungsprodukte beispielsweise des 3-Acryloyloxy-2-hydroxypropyl-methacrylats mit Polyisocyanaten erhalten werden können, die sich als Härter in Dual Cure Beschichtungssystemen eignen.

Gegenstand der Erfindung ist daher ein Verfahren zur Herstellung von Dual Cure-Härtern durch Umsetzung mindestens eines Di- oder Polyisocyanats A mit dem Produkt B der Umsetzung von B 1 Acrylsäure, Methacrylsäure und/oder dimerer Acrylsäure mit B2 Glycidylmethacrylat und/oder Glycidylacrylat, dadurch gekennzeichnet, dass B einen Gehalt von weniger als 0,2 Gew.-% an Epoxidgruppen (brechnet als M = 42) und eine Säurezahl unter 10 mg KOH/g aufweist.

Der einfindungsgemäße kärter kann in ein- oder mehrkomponentigen Beschichtungsmitteln eingesetzt werden, so daß diese folgende komponenten enthalten
C1) ein oder mehrere nach dem erfindungsgemäßen Verfahren hergestellte Polyisocyanate und
C2) ein oder mehrere Verbindungen, die mindestens eine isocyanatreaktive Gruppe aufweisen und ggf. eine oder mehrere funktionelle Gruppen enthalten, die unter Einwirkung aktinischer Strahlung mit ethylenisch ungesättigten Verbindungen unter Polymerisation reagieren,
C3) ggf. weitere, von (C1) verschiedene Polyisocyanate, die ggf. eine oder mehrere funktionelle Gruppen enthalten, die unter Einwirkung aktinischer Strahlung mit ethylenisch ungesättigten Verbindungen unter Polymerisation reagieren
C4) ggf. Verbindungen, die funktionelle Gruppen tragen, die durch Einwirkung aktinischer Strahlung mit ethylenisch ungesättigten Verbindungen unter Polymerisation reagieren und die weder Isocyanat-Gruppen noch Isocyanat-reaktive Gruppen auf weisen,
C5) ggf. Katalysatoren und
C6) ggf. Hilfs- und Zusatzstoffe
C7) ggf. Produkte aus Reaktionen der Komponenten C1) bis C6) untereinander.

Di- oder Polyisocyanate A sind aromatische, araliphatische, aliphatische oder cycloaliphatische Di- oder Polyisocyanate. Es können auch Mischungen solcher Di- oder Polyisocyanate eingesetzt werden. Beispiele geeigneter Di- oder Polyisocyanate sind Butylendiisocyanat, Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4''-triisocyanat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind Polyisocyanate auf Basis oligomerisierter und/oder derivatisierter Diisocyanate, die durch geeignete Verfahren von überschüssigern Diisocyanat befreit wurden, insbesondere die des Hexamethylendiisocyanat, Isophorondiisocyanat und der isomeren Bis(4,4'-isocyanatocyclohexyl)methane sowie deren Mischungen. Besonders bevorzugt sind die oligomeren Isocyanurate und Iminooxadiazindione des HDI und deren Mischungen sowie die oligomeren Isocyanurate des IPDI.

Es ist gegebenenfalls auch möglich, die vorgenannten Isocyanate teilweise mit dem Fachmann aus der Beschichtungstechnologie bekannten Blockierungsmitteln umzusetzen. Als Beispiel für Blockierungsmittel seien genannt: Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-tert.-Butyl-benzylamin, Cyclopentanoncarboxyethylester oder beliebige Gemische dieser Blockierungsmittel.

Das Umsetzungsprodukt B wird durch Reaktion von Acrylsäure, Methacrylsäure und/oder dimerer Acrylsäure mit Glycidylacrylat und/oder Glycidylmethacrylat hergestellt. Bevorzugt ist das Umsetzungsprodukt von Glycidylmethacrylat mit Acrylsäure. Die Umsetzung der Säure mit der Glycidylverbindung erfolgt im Equivalentverhältnis 0,90 zu 1,00 bis 1,30 zu 1,00, bevorzugt jedoch von 1,01 zu 1,00 bis 1,20 zu 1,00. Die Reaktion wird bevorzugt katalysiert, wobei es vorteilhaft ist, eine kleinere Teilmenge des Katalysators gegen Ende der Reaktion zuzugeben, um möglichst vollständigen Umsatz zu erreichen. Als Katalysatoren kommen die in der Literatur als Katalysatoren für die Reaktion von Glycidylverbindungen mit Carbonsäuren bekannten Verbindungen wie z.B. tert. Amine, tert. Phosphine, Ammonium- oder Phosphoniumverbindungen, Thiodiglykol, Zinn-, Chrom-, Kalium- und Caesiumverbindungen in Betracht. Bevorzugt sind solche, die frei von Amin- oder Ammoniumverbindungen sind. Insbesondere bevorzugt ist Triphenylphosphin. Bevorzugt wird die Reaktion in Anwesenheit von Stabilisatoren für Acrylate und Methacrylate durchgeführt. Neben sauerstoffhaltigem Gas eignen sich chemische Stabilisatoren zur Vermeidung vorzeitiger Polymerisation in einer Menge von 0,01 - 1 Gew.-%, bevorzugt 0,1 - 0,5 Gew. % bezogen auf die Menge der ungesättigten Verbindungen. Solche Stabilisatoren sind beispielsweise in Houben-Weyl, Methoden der organischen Chemie, 4. Auflage, Band XIV/1, Georg Thieme Verlag, Stuttgart 1961, Seite 433 ff. beschrieben. Als Beispiele seien genannt: Natriumdithionit, Natriumhydrogensulfid, Schwefel, Hydrazin, Phenylhydrazin, Hydrazobenzol, N-Phenyl-β-naphthylamin, N-Phenyl-ethanoldiamin, Dinitrobenzol, Picrinsäure, p-Nitroso-dimethylanilin, Diphenylnitrosamin, Phenole, wie para-Methoxyphenol, 2,5-Di-tert.-Butylhydrochinon, 2,6-Di-tert.-butyl-4-methylphenol, p-tert-Butyl-brenzcatechin oder 2,5-Di-tert.-amyl-hydrochinon, Tetramethylthiuramdisulfid, 2-Mercaptobenzthiazol, Dimethyl-dithiocarbaminsäure-natriumsalz, Phenothiazin, N-Oxyl-Verbindungen wie z.B. 2,2,6,6-Tetramethylpiperidin-N-Oxid (TEMPO) oder eines seiner Derivate. Bevorzugt sind 2,6-Di-tert.-butyl-4-methylphenol und para-Methoxyphenol sowie deren Mischungen.

Die Reaktion kann in Anwesenheit eines gegenüber Edukten und Produkten inerten organischen Lösemittels, das bevorzugt auch inert gegenüber Isocyanaten ist, durchgeführt werden. Beispiele sind Lacklösemittel wie Butylacetat, Solventnaphtha, Methoxypropylacetat oder Kohlenwasserstoffe wie Cyclohexan, Methylcyclohexan oder Isooktan. Nach Ende der Reaktion kann das Lösemittel z.B. destillativ entfernt werden oder im Umsetzungsprodukt B verbleiben. Bevorzugt wird auf die Verwendung von Lösemittel zur Herstellung von B verzichtet. Die Komponenten können in beliebiger Reihenfolge zur Reaktion gebracht werden. Bevorzugt wird eine Komponente vorgelegt, mit der Hauptmenge des Katalysators und mit Stabilisator versetzt und unter Rühren erwärmt. Die andere Komponente wird anschließend auf einmal oder bevorzugt allmählich zudosiert, wobei durch Heizung und Reaktionswärme möglichst eine konstante Temperatur gehalten wird. Durch Analyse wird der Grad des Umsatzes bestimmt. Diese kann spektroskopisch z.B. durch Aufnahme von Infrarot- oder Nahinfrarotspektren erfolgen, es können jedoch auch chemische Analysen an entnommenen Proben durchgeführt werden. Insbesondere eignet sich sowohl der Säure- als auch der Epoxidgehalt als Maß für den Umsatz der Reaktion. Die Dosierung und die Reaktion wird bei einer Temperatur zwischen 60 °C und 140 °C, bevorzugt zwischen 70 °C und 120 °C, besonders bevorzugt zwischen 80 °C und 95 °C durchgeführt. Bevorzugt wird die Reaktion solange durchgeführt, bis ein Epoxidgehalt unter 0,2 Gew.%, bevorzugt unter 0,1 Gew.% (berechnet als M = 42) und eine Säurezahl unter 10 mg KOH/g, besonders bevorzugt unter 5 mg KOH/g erreicht ist. Wird die Reaktion vorher abgebrochen, so kann z.B. durch Anlegen von Vakuum oder Durchleiten eines Gases, welches bevorzugt Sauerstoff enthält, der Restgehalt an Edukten reduziert werden, so dass entsprechend niedrige Epoxid- und Säuregehalte erreicht werden. Es ist ebenfalls möglich, den Epoxidgehalt durch Zugabe von kleinen Mengen an Epoxid-reaktiven Verbindungen wie stärkeren Säuren z.B. Butylphosphat zu senken. Analog können Restgehalte an Säure z.B. durch Reaktion mit Carbodiimiden oder Aziridinen reduziert werden.

Die entstandenen Produkte B können sofort weiter umgesetzt werden oder zunächst gelagert oder transportiert werden. Bevorzugt erfolgt der weitere Umsatz ohne weitere Reinigung wie z.B. Extraktion oder Destillaton mit den Polyisocyanaten A. Der Gehalt an Bestandteilen in B, der nach Gelpermeationschromatographie oligomeren oder polymeren Charakter hat, beträgt bevorzugt weniger als 35 besonders bevorzugt weniger als 25 Gew.-%.

Bei der Umsetzung von A mit B handelt es sich bevorzugt um die Urethanisierung. Neben der Urethanisierung ist beispielsweise auch eine Allophanatisierung Oxadiazintriongruppen haltiger Polyisocyanate A mit B möglich, bei der unter geeigneter Katalyse Kohlendioxid frei wird. Im Anschluss an die Umsetzung A mit B sind weitere aus der Chemie der Di- und Polyisocyanate bekannte Reaktionen möglich wie z.B. die weitere Urethanisierung und/oder die Allophanatisierung, Biuretisierung, Trimerisierung, Hamstoffbildung und/oder Uretdionisierung, gegebenenfalls unter Zugabe von mit Isocyanaten reaktiven Verbindungen wie Hydroxyl- oder Aminoverbindungen. Insbesondere können noch freie Isocyanatgruppen mit dem Fachmann aus der Beschichtungstechnologie bekannten Blockierungsmitteln umgesetzt werden. Als Beispiel für Blockierungsmittel seien genannt: Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-tert.-Butyl-benzylamin, Cyclopentanoncarboxyethylester oder beliebige Gemische dieser Blockierungsmittel. Weiterhin ist die Einführung von hydrophilierend oder potentiell hydrophilierend wirkenden Gruppen möglich, wenn zum Beispiel eine Verwendung der Umsetzungsprodukte in wässrigen Beschichtungssystemen gewünscht wird.

Weiterhin können für eine mögliche weitere Umsetzung zusätzliche Mengen an unter A genannten Diisocyanaten zugegeben werden. Es ist auch möglich, nicht umgesetzte Diisocyanate durch Trennverfahren wie z.B. eine Destillation zu entfernen.

Da bevorzugt Polyisocyanate auf Basis oligomerisierter Diisocyanate, die durch geeignete Verfahren von überschüssigem Diisocyanat befreit wurden, als A eingesetzt werden, enthalten die Umsetzungsprodukte A mit B bevorzugt weniger als 0,5 Gew.-%, besonders bevorzugt weniger als 0,2 Gew.-% monomerer Diisocyanate. Wenn die Umsetzungsprodukte zur Herstellung von Härtern des Dual Cure-Typs eingesetzt werden sollen, werden die Equivalentverhältnisse für die Umsetzung A mit B so gewählt, dass das Umsetzungsprodukt noch freie oder blockierte Isocyanatgruppen enthält. Dabei ist ein Gehalt an Isocyanatgruppen (M = 42) von 0,5 bis 25, insbesondere von 3,0 bis 12,0 Gew.-% besonders bevorzugt. Das erfindungsgemäße Verfahren eignet sich auch zur Herstellung von Umsetzungsprodukten von A und B, die keine freien oder blockierten Isocyanatgruppen enthalten. Diese können zur Herstellung von photochemisch vernetzbaren Massen eingesetzt werden.

Die Umsetzung A mit B kann unter zu Hilfenahme der zur Beschleunigung der Isocyanatadditionsreaktion bekannten Katalysatoren, wie z. B. tertiärer Amine, Zinn-, Zink- oder Wismuthverbindungen, insbesondere Triethylamin, 1,4-Diazabicyclo-[2,2,2]-octan, Wismuthoktoat oder Dibutylzinndilaurat erfolgen, die mit vorgelegt oder später zudosiert werden können.

Weiterhin kann die Zugabe von Stabilisatoren zweckmäßig sein. In Frage kommen die bereits oben zur Stabilisierung von (Meth)acrylaten genannten Verbindungen sowie Verbindungen, die Isocyanate vor weiteren Reaktionen außer den gewünschten stabilisieren. Beispiele für letztere sind insbesondere Säuren oder Säurederivate, z.B. Benzoylchlorid, Phthaloylchlorid, phosphinige, phosphonige und/oder phosphorige Säure, Phosphin-, Phosphon- und/oder Phosphorsäure sowie die sauren Ester der letztgenannten 6 Säuretypen, Schwefelsäure und ihre sauren Ester und/oder Sulfonsäuren. Die Zugabe der Stabilisatoren kann vor, während und/oder nach der Umsetzung erfolgen.

Die Reaktion kann in Anwesenheit gegenüber Edukten und Produkten inerten organischen Lösemittelen und/oder Reaktiwerdünnern durchgeführt werden. Beispiele für Lösemittel sind insbesondere Lacklösemittel wie Ethylacetat, Butylacetat, Solventnaphtha der Fa. Exxon-Chemie als aromatenhaltiges Lösungsmittel und/oder Methoxypropylacetat sowie Aceton, Butanon. Nach Ende der Reaktion kann das Lösemittel z.B. destillativ entfernt werden oder bevorzugt im Umsetzungsprodukt B verbleiben. Entsprechende Lösemittel können - wenn gewünscht - auch nach der Reaktion zugegeben werden. Neben Lösemitteln können auch Reaktivverdünner verwendet werden. Solche sind beispielsweise die in der Technologie der Strahlenhärtung bekannten Verbindungen (vgl. Römpp Lexikon Chemie, S.491, 10. Aufl. 1998, Georg-Thieme-Verlag, Stuttgart), insbesondere solche mit geringen Hydroxylgehalten von weniger als 30, bevorzugt von weniger als 10 mg KOH/g. Beispielhaft seien die Ester der Acrylsäure oder Methacrylsäure erwähnt, bevorzugt der Acrylsäure, mit den folgenden Alkoholen: Einwertige Alkohole wie die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole Weiterhin können alkoxylierte Derivate dieser Alkohole verwendet werden, zweiwertige Alkohole wie beispielsweise Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Ester höherwertiger Alkohole wie Glycerin, Trimethylolpropan, Ditrimethylolpropan, Pentaerythrit oder Dipentaerythrit oder deren alkoxylierte Derivate können ebenfalls eingesetzt werden.

Die Umsetzung A mit B erfolgt entweder kontinuierlich z.B. in einem statischem Mischer oder diskontinuierlich z.B. in einem geeigneten Rührgefäß. Bei diskontinuierlicher Fahrweise kann sowohl A als auch B vorgelegt werden und die jeweils andere Komponente bei Raumtemperatur oder erhöhter Temperatur zudosiert werden. Durch Heizen und/oder exotherme Reaktion wird die Reaktion bevorzugt im Temperaturbereich zwischen 40 °Cund 130 °C, insbesondere 60 °C bis 80 °C gehalten. Durch Analyse wird der Grad des Umsatz bestimmt. Diese kann spektroskopisch z.B. durch Aufnahme von Infrarot- oder Nahinfrarotspektren erfolgen, es können jedoch auch chemische Analysen an entnommenen Proben durchgeführt werden. Insbesondere eignet sich z.B. der Isocyanat- gegebenenfalls auch der Hydroxylgehalt als Maß für den Umsatz der Reaktion.

Bevorzugte Umsetzungsprodukte von A mit B weisen eine Doppelbindungsdichte (Acrylat und Methacrylat) von 1,0 oder mehr, bevorzugt von 2,0 oder mehr mol C=C pro kg (bezogen auf nichtflüchtigen Anteil) auf.

Der erfindungsgemäße Dual Cure Härtes kann in ein- oder mehromponentigen Beschichtungsmitteln eingesetzt werden, so daß diese folgende komponenten enthalten
C1) ein oder mehrere nach dem erfindungsgemäßen Verfahren hergestellte Polyisocyanate und
C2) ein oder mehrere Verbindungen, die mindestens eine isocyanatreaktive Gruppe aufweisen und ggf. eine oder mehrere funktionelle Gruppen enthalten, die unter Einwirkung aktinischer Strahlung mit ethylenisch ungesättigten Verbindungen unter Polymerisation reagieren,
C3) ggf. weitere Polyisocyanate, die ggf. eine oder mehrere funktionelle Gruppen enthalten, die unter Einwirkung aktinischer Strahlung mit ethylenisch ungesättigten Verbindungen unter Polymerisation reagieren
C4) ggf. Verbindungen, die funktionelle Gruppen tragen, die durch Einwirkung aktinischer Strahlung mit ethylenisch ungesättigten Verbindungen unter Polymerisation reagieren und die weder Isocyanat-Gruppen noch Isocyanat-reaktive Gruppen auf weisen,
C5) ggf. Katalysatoren und
C6) ggf. Hilfs- und Zusatzstoffe
C7) ggf. Produkte aus Reaktionen der Komponenten C1) bis C6) untereinander.

Die Verbindungen der Komponente C2) können monomer, oligomer oder polymer sein und enthalten mindestens eine, bevorzugt zwei oder mehr mit Isocyanaten reaktive Gruppen.

Geeignete Verbindungen der Komponente C2) sind niedermolekulare kurzkettige, d.h. 2 bis 20 Kohlenstoffatome enthaltende aliphatische, araliphatische oder cycloaliphatische Diole, Triole und/oder höhere Polyole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit.

Geeignet sind auch höhermolekulare Polyole wie Polyesterpolyole, Polyetherpolyole, hydroxyfunktionelle Acrylharze, hydroxyfunktionelle Polyurethane oder entsprechende Hybride (vgl. Römpp Lexikon Chemie, S.465-466, 10. Aufl. 1998, Georg-Thieme-Verlag, Stuttgart).

Weiterhin können als Verbindungen der Komponente C2) alle Verbindungen einzeln oder in beliebigen Mischungen verwendet werden, die mindestens eine gegenüber Isocyanaten reaktive Gruppe und mindestens eine ungesättigte Funktion aufweisen, die unter Einwirkung aktinischer Strahlung mit ethylenisch ungesättigten Verbindungen unter Polymerisation reagiert.

Bevorzugt werden α,β-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt, besonders bevorzugt sind dies Acrylate und Methacrylate mit mindestens einer isocyanatreaktiven Gruppe.

Als hydroxyfunktionelle Acrylate oder Methacrylate kommen beispielsweise Verbindungen wie 2-Hydroxyethyl(meth)acrylat, Polyethylenoxid-mono(meth)acrylate, Polypropylenoxidmono(meth)-acrylate, Polyalkylenoxidmono(meth)acrylate, Poly(ε-caprolacton)mono(meth)acrylate, wie z.B. Tone^{®} M100 (Dow, USA), 2-Hydroxypropyl(meth)acrylat, 4-Hydroxybutyl(meth)acrylat, 3-Hydroxy-2,2-dimethylpropyl(meth)acrylat, die hydroxyfunktionellen Mono-, Di- oder Tetraacrylate mehrwertiger Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische in Betracht.

Darüberhinaus sind isocyanat-reaktive oligomere oder polymere ungesättigte Acrylat- und/oder Methacrylatgruppen enthaltende Verbindungen alleine oder in Kombination mit den vorgenannten monomeren Verbindungen geeignet. Bevorzugt werden dabei hydroxylgruppenhaltige Polyesteracrylate mit einem OH-Gehalt von 30 bis 300 mg KOH/g, bevorzugt 60 bis 200, besonders bevorzugt 70 bis 120 mg KOH/g eingesetzt.

Die Herstellung von Polyesteracrylaten wird in der DE-A 4 040 290 (S.3, Z. 25 - S.6, Z. 24), DE-A-3 316 592 (S. 5, Z. 14 - S. 11, Z. 30) und P. K. T. Oldring (Ed.), Chemistry & Technology of UV & EB Formulations For Coatings, Inks & Paints, Vol. 2, 1991, SITA Technology, London, S. 123-135 beschrieben.

Ebenfalls verwendet werden können die an sich bekannten hydroxylgruppenhaltigen Epoxy(meth)acrylate mit OH-Gehalten von 20 bis 300 mg KOH/g, bevorzugt von 100 bis 280 mg KOH/g, besonders bevorzugt von 150 bis 250 mg KOH/g oder hydroxylgruppenhaltige Polyurethan(meth)acrylate mit OH-Gehalten von 20 bis 300 mg KOH/g, bevorzugt von 40 bis 150 mg KOH/g, besonders bevorzugt von 50 bis 100 mg KOH/g oder acrylierte Polyacrylate mit OH-Gehalten von 20 bis 300 mg KOH/g, bevorzugt von 40 bis 150 mg KOH/g, besonders bevorzugt von 50 bis 100 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten. Solche Verbindungen werden ebenfalls in P. K. T. Oldring (Ed.), Chemistry & Technology of UV & EB Formulations For Coatings, Inks & Paints, Vol. 2, 1991, SITA Technology, London S 37 - 56 beschrieben. Hydroxylguppenhaltige Epoxy(meth)acrylate basieren insbesondere auf Umsetzungsprodukten von Acrylsäure und/oder Methacrylsäure mit Epoxiden (Glycidylverbindungen) von monomeren, oligomeren oder polymeren Bisphenol-A, Bisphenol-F, Hexandiol und/oder Butandiol oder deren ethoxilierten und/oder propoxilierten Derivaten. Acrylierte Polyacrylate können beispielsweise durch Umsetzung von glycidylfunktionellen Polyacrylaten mit (Meth)acrylsäure hergestellt werden.

Polyisocyanate im Sinne von C3) basieren auf den bereits vorstehend bei A genannten Isocyanaten einschließlich der dort genannten Vorzugsbereiche. Bei Verwendung von Blockierungsmitteln können alle Isocyanatgruppen blockiert sein. Die Polyisocyanate C3) können gegebenenfalls eine oder mehrere funktionelle Gruppen enthalten, die unter Einwirkung aktinischer Strahlung mit ethylenisch ungesättigten Verbindungen unter Polymerisation reagieren. Diese Gruppen können durch Reaktion der unter C2) genannten ungesättigten und isocyanatreaktiven Verbindungen mit gesättigten Polyisocyanaten nach an sich bekannten Methoden hergestellt werden, wobei die monomeren unter C2) genannten ungesättigten und isocyanatreaktiven Verbindungen bevozugt sind.

Als Verbindungen der Komponente C4) können Polymere wie Polyacrylate, Polyurethane, Polysiloxane, sowie Verbindungen, die durch Einwirkung aktinischer Strahlung mit ethylenisch ungesättigten Verbindungen unter Polymerisation reagieren, eingesetzt werden. Solche Gruppen sind βungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen. Bevorzugt sind Acrylate und Methacrylate. Beispiele beinhalten die in der Technologie der Strahlenhärtung bekannten Reaktivverdünner (vgl. Römpp Lexikon Chemie, S.491, 10. Aufl. 1998, Georg-Thieme-Verlag, Stuttgart) oder die in der Technologie der Strahlenhärtung bekannten Bindemittel wie Polyetheracrylate, Polyesteracrylate, Urethanacrylate, Epoxyacrylate, Melaminacrylate, Silikonacrylate, Polycarbonatacrylate und acrylierte Polyacrylate, soweit diese einen Gehalt von Hydroxylgruppen unter 30, bevorzugt unter 20, besonders bevorzugt unter 10 mg KOH/g aufweisen.

Beispielhaft seien die Ester der Acrylsäure oder Methacrylsäure als Bestandteil von C4) genannt, bevorzugt der Acrylsäure, der folgenden Alkohole: Einwertige Alkohole wie die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole wie beispielsweise Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Höherwertige Alkohole sind Glycerin, Trimethylolpropan, Ditrimethylolpropan, Pentaerythrit oder Dipentaerythrit oder deren alkoxylierte Derivate.

Als Bestandteil von C5) können zur Beschleunigung der Aushärtung der unblockierten oder blockierten Isocyanate mit den jeweiligen aktiven Wasserstoff enthaltenden Reaktionspartnern wie Alkoholen, Aminen und den gemischt Alkohol- und Amin-haltigen Reaktionspartnern die in der Isocyanatchemie bekannten Katalysatoren mitverwendet werden. Geeignet sind hierbei bei unblockierten Isocyanaten tertiäre Amine, Zinn-, Zink- oder Wismuthverbindungen, insbesondere Triethylamin, 1,4-Diazabicyclo-[2,2,2]-octan, Zinndioktoat oder Dibutylzinndilaurat. Bei blockierten Isocyanaten eignen sich mindestens zweiwertige Ionen von Lewis-Säuren, z.B. Salze des Zinks, des Titans, des Zirkons und des Wismuts.

Die Menge des Katalysators C5) kann durch den Fachmann den Erfordernissen der Aushärtung angepasst werden, wobei insbesondere die Aushärtetemperatur, die erforderliche Härtungsgeschwindigkeit und bei freien Isocyanatgruppen gegebenenfalls die Topfzeit zu berücksichtigen sind. Geeignete Mengen sind z.B. 0,01 bis 2 Gew.%, bevorzugt ist die Verwendung von 0,05 bis 1 Gew.%, besonders bevorzugt ist 0,07 bis 0,6 Gew.% Katalysator bezogen auf den gesamten Festkörpergehalt.

Als Komponente C6) können in der Technologie der Lacke, Farben, Druckfarben, Dichtstoffe und Klebstoffe übliche Zusätze oder Hilfsmittel enthalten sein. Dazu gehören auch durch aktinische Strahlung aktivierbare Initiatoren, die eine radikalische Polymerisation der entsprechenden polymerisierbaren Gruppen auslösen. Fotoinitiatoren, die durch UV- oder sichtbares Licht aktiviert werden, sind hierbei bevorzugt. Derartige Fotoinitiatoren sind an sich bekannte, kommerziell vertriebene Verbindungen, wobei zwischen unimolekularen (Typ I) und bimolekularen (Typ II) Initiatoren unterschieden wird. Geeignete (Typ I)-Systeme sind z.B. aromatische Ketonverbindungen, z.B. Benzophenone in Kombination mit tertiären Aminen, Alkylbenzophenone, 4,4'-Bis(dimethylamino)benzophenon (Michler's Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Soll das erfindungsgemäße Beschichtungsmittel wässrig verarbeitet werden, so finden bevorzugt Fotoinitiatoren Verwendung, die leicht in wässrige Beschichtungsmittel einarbeitbar sind. Solche Produkte sind beispielsweise Irgacure^{®} 500, Irgacure^{®} 819 DW (Fa. Ciba, Lampertheim, DE), Esacure^{®} KIP (Fa. Lamberti, Aldizzate, Italien). Es können auch Gemische dieser Verbindungen eingesetzt werden.

Soll die Härtung der polymerisierbaren Bestandteile zusätzlich thermisch initiiert werden, eignen sich als Verbindungen der Komponente C6) Peroxyverbindungen wie Diacylperoxide z.B. Benzoylperoxid, Alkylhydroperoxid wie Diisopropylbenzolmonohydroperoxid, Alkylperester wie tert.-Butylperbenzoat, Dialkylperoxide wie Di.-tertbutylperoxid, anorganische Peroxide wie Ammoniumperoxodisulfat, Kaliumperoxodisulfat, Peroxidicarbonate wie Dicetylperoxiddicarbonat, oder auch Azoverbindungen wie 2,2'-Azobis[N-(2-propenyl)-2-methylpropionamide], 1-[(Cyano-1-methylethyl)azo]formamide, 2,2'-Azobis(N-butyl-2-methylpropionamide), 2,2'-Azobis(N-cyclohexyl-2-methylpropionamide), 2,2'-Azobis{2-methyl-N-[2-(1-hydroxybutyl)]propionamide}, 2,2'-Azobis-{2-methyl-N-[2-(1-hydroxybutyl)]propionamide, 2,2'-Azobis{2-methyl-N-[1,1-bis(hydroxymethyl)-2-hydroxyethyl]propionamide, weiterhin auch Benzpinakol und seine Derivate. Für wässrige Beschichtungssysteme werden Verbindungen bevorzugt, die wasserlöslich sind oder als wässrige Emulsionen vorliegen. Diese Radikalbildner können in bekannter Weise mit Beschleunigern kombiniert werden.

Weiterhin verwendbare Zusätze sind bereits unter B) beschriebene Stabilisatoren, Lichtschutzmittel wie UV-Absorber und sterisch gehinderte Amine (HALS), weiterhin Antioxidantien, Füllstoffe sowie Lackhilfsmittel, z.B. Antiabsetzmittel, Entschäumungs- und/oder Netzmittel, Verlaufmittel, Reaktivverdünner, Weichmacher, Katalysatoren, Hilfslösemittel und/oder Verdicker sowie Pigmente, Farbstoffe und/oder Mattierungsmittel. Der Einsatz von Lichtschutzmitteln und die verschiedenen Typen sind beispielhaft beschrieben in A. Valet, Lichtschutzmittel für Lacke, Vincentz Verlag, Hannover, 1996

Die erfindungsgemäßen Beschichtungsmittel lassen sich durch die üblichen Techniken auf unterschiedlichste Substrate applizieren, wie beispielsweise durch Spritzen, Walzen, Rakeln, Gießen, Sprühen, Streichen, Tränken, Tauchen oder durch Druck-Techniken wie Tief-, Flexo- oder Offsetdruck sowie durch Transfer-Methoden. Geeignete Substrate sind beispielsweise Holz, Metall, insbesondere auch Metall wie es in den Anwendungen der sogenannten Draht-, Coil-, Can- oder Container-Lackierung verwendet wird, weiterhin Kunststoff auch in Form von Folien, insbesondere ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1), Papier, Leder, Textilien, Filz, Glas, Holz, Holzwerkstoffe, Kork, anorganisch gebundene Substrate wie Holz- und Faserzementplatten elektronische Baugruppen oder mineralische Untergründe. Es können auch Substrate, die aus verschiedenen der vorgenannten Materialien bestehen, oder bereits beschichtete Substrate lackiert werden. Es ist auch möglich die Beschichtungsmittel nur temporär auf ein Substrat aufzubringen, dann teilweise oder vollständig zu härten und wieder abzulösen, um z.B. Folien herzustellen. Insbesondere eignen sich die erfindungsgemäßen Beschichtungsmittel für den Einsatz bei der Lackierung von Fahrzeugen, insbesondere Automobilkarossen oder Anbauteilen, bevorzugt in Form von Klarlacken.

Die applizierten Schichtdicken (vor der Härtung) liegen typischerweise zwischen 0,5 und 5000 µm, bevorzugt zwischen 5 und 1500 µm, besonders bevorzugt zwischen 15 und 1000 µm. Bei Verwendung von Lösungsmitteln wird dieses nach der Applikation durch die gängigen Methoden entfernt.

Die Strahlungshärtung erfolgt bevorzugt durch Einwirkung energiereicher Strahlung, also UV-Strahlung oder Tageslicht, z.B. Licht der Wellenlänge 200 bis 750 nm, oder durch Bestrahlen mit energiereichen Elektronen (Elektronenstrahlung, 90 bis 300 keV). Als Strahlungsquellen für Licht oder UV-Licht dienen beispielsweise Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z.B. unter InertgasAtmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise oder durch orientierende Vorversuche zu variieren bzw. zu optimiern.

Besonders bevorzugt werden zur Härtung Quecksilberhochdruckstrahler in ortsfesten Anlagen eingesetzt. Fotoinitiatoren werden dann in Konzentrationen von 0,1 bis 10, besonders bevorzugt 0,2 bis 3,0 Gew.-% bezogen auf den Festkörper der Beschichtung eingesetzt. Zur Härtung dieser Beschichtungen wird bevorzugt eine Dosis von 200 bis 3000 mJ/cm², gemessen im Wellenlängebereich von 200 bis 600 nm, verwendet.

Erfindungsgemäße Beschichtungsmittel härten weiterhin durch Einwirkung von thermischer Energie. Die thermische Energie kann dabei durch Strahlung, Wärmeleitung und/oder Konvektion in die Beschichtung eingebracht werden, wobei üblicherweise die in der Beschichtungstechnologie gebräuchlichen Infrarot-Strahler, Nahinfrarotstrahler und/oder Öfen zum Einsatz kommen. Durch die Zuführung thermischer Energie wird die Vernetzungsreaktion der gegebenenfalls blockierten Isocyanatgruppen mit den Isocyanat-reaktiven Gruppen des Beschichtungsmittels ausgelöst. Sind freie Isocyanatgruppen im Beschichtungsmittel vorhanden, kann gegebenenfalls die vorhandene Umgebungswärme zur allmählichen Aushärtung ausreichen, so dass keine zusätzliche thermische Energie in das System eingebracht werden muss.

Da durch die Einwirkung aktinischer Strahlung und der thermischen Energie zwei unabhängige chemische Mechanismen in Gang gesetzt werden, kann die Reihenfolge aktinische Strahlung/thermische Energie und damit die Reihenfolge, in der die Mechanismen ablaufen, beliebig kombiniert und variiert werden. Bevorzugt wird zunächst gegebenenfalls vorhandenes organisches Lösungsmittel und/oder Wasser mit den in der Beschichtungstechnologie üblichen Methoden entfernt. In einer bevorzugten Variante wird anschließend zunächst durch Einwirkung aktinischer Strahlung ganz oder teilweise gehärtet. Unmittelbar danach oder auch später sowie an der räumlich gleichen oder getrennter Stelle kann die thermische Härtung erfolgen. Es ist so zum Beispiel möglich, zunächst flexible Beschichtungen zu erzeugen, die eine Verformung des Substrats schadlos überstehen und diese anschließend thermisch weiter zu härten. Es ist so zum Beispiel möglich, ggf. bereits beschichtetes Metall in Form sogenannter Coils zu beschichten und die Beschichtungen zunächst durch Einwirkung von aktinischer Strahlung zu einer flexiblen Beschichtung zu härten.

Aus den beschichteten Coils können dann bestimmte Teile durch dem Fachmann bekannte Verfahren wie z.B. Stanzen herausgelöst und mechanisch in eine neue Form gebracht werden, ohne dass die Beschichtung Schaden nimmt und z.B. reißt. Anschließend wird durch thermische Energie die Vernetzungsreaktion der beispielsweise blockierten Isocyanatgruppen mit den Isocyanat-reaktiven Gruppen des Beschichtungsmittels ausgelöst, so dass sehr beständige Beschichtungen entstehen, die sich beispielsweise auch als Klarlacke für Automobilkarosserien oder für im Automobilbau verwendete Teile eignen.

### Beispiele

Säurezahl: Angabe mg KOH / g Probe, Titration mit 0,1 mol/l NaOH-Lösung gegen Bromthymolblau (ethanolische Lösung), Farbumschlag von gelb über grün nach blau, Grundlage DIN 3682.

Hydroxylzahl: Angabe in mg KOH / g Probe, Titration mit 0,1 mol/l meth. KOH-Lösung nach kalter Acetylierung mit Essigsäureanhydrid unter Katalyse von Dimethylaminopyridin, Grundlage DIN 53240.

Epoxidgehalt: Die in Methylenchlorid/Esssigsäure gelöste Probe wird nach Zugabe von Tetrabutylammoniumjodid mit einer Perchlorsäure-Maßlösung (0,1mol/L) titriert. Dabei wird das freigewordene Amin sowie vorhandenes basisches Amin erfasst. Das basische (freies) Amin wird analog bestimmt, aber ohne Zusatz von Tetrabutylammoniumjodid. Aus der Differenz ergibt sich der Gehalt an Epoxid in %, berechnet als CH-O-CH (MG=42 g/mol). Grundlage DIN 16945.

Isocyanatgehalt: Angabe in %, Rücktitration mit 0,1 mol/l Salzsäure nach Reaktion mit Butylamin, Grundlage DIN EN ISO 11909.

Gelpermeationschromatographie (GPC): Elutionsmittel THF, RI-Detektion, Integration nach Eichung mit Polystyrolstandards.

Viskositäten: Rotationsviskosimeter, Messungen bei 23 °C und 250 s⁻¹ Schergefälle für Umsetzungen von Glycidylmethacrylat mit Acrylsäure, bzw. 40 s⁻¹ Schergefälle für Umsetzungen der Polyisocyanate.

Wenn nicht anderweitig vermerkt handelt es sich bei %-Angaben um Gew.-%.

### Umsetzung von Glycidylmethacrylat mit Acrylsäure:

Jeweils 13,27 g Glycidylmethacrylat, 0,02 g 2,6-Di-tert.-butyl-4-methylphenol, 6,78 g Acrylsäure und je 0,10 g Katalysator gemäß Tabelle 1 wurden in einem Glasgefäß mit kleiner Öffnung unter magnetischem Rühren bei 90 °C umgesetzt. Nach 24 Stunden wurde die Säurezahl bestimmt. War diese größer als 4 mg KOH/g wurde weitere 24 h bei 90 °C gerührt und danach die Säurezahl erneut bestimmt.

**Tabelle 1: Versuchsserie 90°C**

| Bsp. | Katalysator | Säurezahl nach 24 h (mg KOH/g) | Säurezahl nach 48 h (mg KOH/g) | Hydroxylzahl (mg KOH/g) | GPC Hauptsignal (Flächen-%) | Bemerkung |
|---|---|---|---|---|---|---|
| 1 | Tetrabutylammoniumhydroxid | 9,2 | 1,2 | 222 | 70 | |
| 2 | Triethylamin | 5,3 | 0,8 | 220 | 68 | Gelb |
| 3 | Fascat 4100 *) | 7,0 | 3,8 | 208 | 58 | |
| 4 | Caesiumchlorid | 5,9 | 0,7 | 224 | 70 | Gelb |
| 5 | Tetrabutylphosphoniumbromid | 6,2 | 0,8 | 219 | 71 | Gelb |
| 6 | Diazabicyclooctan | 9,0 | 1,9 | 232 | 80 | Gelb |
| 7 | Dibutylphosphat | 12,4 | 6,0 | - | - | - |
| 8 | Zinn(II)octoat | 9,3 | 7,4 | - | - | Viskos |
| 9 | Dibutylzinndilaurat | 12,3 | 6,4 | - | - | - |
| 10 | Thiodiglykol | 8,5 | 4,4 | - | - | - |
| 11 | Triethylbenzylammoniumchlorid | 2,7 | - | 245 | 84 | - |
| 12 | Triphenylphosphin | 1,3 | - | 224 | 68 | - |
| 13 | Dimethylaminopyridin | 1,4 | - | 249 | 85 | Gelb |

| | | | | | | |
|---|---|---|---|---|---|---|
| *) Zinn-haltiger Katalysator, Fa. Elf-Atochem | | | | | | |

Alle untersuchten Katalysatoren zeigen ausreichende Aktivität. Nach 24 h weisen die Produkte aus den Beispielen 11 bis 13 bereits sehr kleine Säurezahlen auf. Die Beispiele 11 bis 13 wurden bei 80 °C Reaktionstemperatur wiederholt (Tabelle 2).

**Tabelle 2: Versuchsserie 80 °C**

| Bsp. | Katalysator | Säurezahl nach 24 h (mg KOH/g) | Säurezahl nach 48 h (mg KOH/g) | Hydroxylzahl (mg KOH/g) | GPC Hauptsignal (Flächen-%) | Bemerkung |
|---|---|---|---|---|---|---|
| 14 | Triethylbenzylammoniumchlorid | 9,2 | 2,1 | 243 | 79 | - |
| 15 | Triphenylphosphin | 6,3 | 1,0 | 220 | 75 | - |
| 16 | Dimethylaminopyridin | 5,7 | 1,6 | 244 | 82 | Gelb |

| | | | | | | |
|---|---|---|---|---|---|---|
| Auch bei 80 °C sind die Katalysatoren noch aktiv. | | | | | | |

### Beispiel 17 und Vergleichsbeispiel V1:

Es wurden 9290 g Glycidylmethacrylat, 70,0 g Triphenylphosphin und 14,0 g 2,6-Di-tert.-butyl-4-methylphenol in einem 15 1-Rührkessel vorgelegt. Es wurden 5 l/h Luft durch die Reaktionsmischung geleitet, sowie 10 l/h Stickstoff übergeleitet. Die Mischung wurde unter Rühren auf 70°C erhitzt. Bei dieser Temperatur wurden innerhalb von 5 h 4710 g Acrylsäure zudosiert. Die Temperatur stieg zu Beginn bis 81°C und wurde anschließend zwischen 65 und 70°C gehalten. Nach Ende der Zugabe wurde die Temperatur auf 90°C gesteigert. Nach 6 h bei 90°C wurde an einer entnommenen Probe eine Säurezahl von 9,4 mg KOH/g bestimmt. Anschließend wurden weitere 14,0 g Triphenylphosphin zugegeben. Nach weiteren 6 h bei 90°C wurde an einer entnommenen Probe eine Säurezahl von 1,8 mg KOH/g bestimmt. Anschließend wurde abgekühlt. Der Epoxidgehalt betrug 0,60 %. Eine Probe dieses Produkts (V1) wurde entnommen und für Vergleichsversuche bereitgestellt. Der Rest wurde weitere 24 h bei 90°C gerührt. Der Epoxidgehalt betrug 0,10 %.

Kennzahlen jeweils nach 24 h Lagerung bei Raumtemperatur:

| | Viskosität | Hydroxylzahl | Säurezahl | Epoxidgehalt | Farbzahl (APHA) |
|---|---|---|---|---|---|
| Vergleichs-Bsp. V 1 | 233 mPas | 233 | 0,9 | 0,60% | 18 |
| Beispiel 17 | 245 mPas | 228 | 0,6 | 0,10% | 25 |

### Beispiel 18:

Beispiel 17 wurde mit folgenden Änderungen wiederholt: Einwaagen: 8484g Glycidylmethacrylat, 45,5 g Triphenylphosphin und 13,0 g 2,6-Di-tert.-butyl-4-methylphenol, sowie 4517 g Acrylsäure und 13,0 g Triphenylphosphin als zweite Portion. Nach Ende der Acrylsäuredosierung dauerte es 13 h bis eine Säurezahl von 9,5 mg KOH/g gemessen wurde. Nach Zugabe der zweiten Portion Triphenylphosphin dauerte es 15 h bis eine Säurezahl von 3,8 erreicht war.

Kennzahlen nach 24 h Lagerung bei Raumtemperatur:

| | Viskosität | Hydroxylzahl | Säurezahl | Epoxidgehalt | Farbzahl (APHA) |
|---|---|---|---|---|---|
| Beispiel 18 | 65 mPas | 228 | 3,5 | 0,10% | 29 |

### Beispiel 19:

Beispiel 17 wurde mit folgenden Änderung wiederholt: Apparatur 21-Glaskolben, Einwaagen 391,5 g Glycidylmethacrylat, 1,20 g Triphenylphosphin und 0,60 g 2,6-Di-tert.-butyl-4-methylphenol, sowie 208,5 g Acrylsäure und 0,60 g Triphenylphosphin als zweite Portion. Die Lufteinleitung wurde auf 0,5 l/h reduziert. Stickstoff wurde nicht übergeleitet. Nach Ende der Acrylsäuredosierung innerhalb 1 h dauerte es 20 h bis eine Säurezahl von 9,5 mg KOH/g gemessen wurde. Nach Zugabe der zweiten Portion Triphenylphosphin dauerte es 23 h bis eine Säurezahl von 3,1 erreicht war.

Kennzahlen nach 24 h Lagerung bei Raumtemperatur:

| | Viskosität | Hydroxylzahl | Säurezahl | Epoxidgehalt | Farbzahl (APHA) |
|---|---|---|---|---|---|
| Beispiel 19 | 76 mPas | 232 | 3,0 | <0,10% | 85 |

### Vergleichsbeispiel V2

Beispiel 19 wurde mit folgenden Änderungen wiederholt: Apparatur 21-Glaskolben, statt Triphenylphosphin wurden 9,00 g Triethylbenzylammoniumchlorid verwendet. Weitere Einwaagen: 1214,3 g Glycidylmethacrylat, 1,80 g 2,6-Di-tert.-butyl-4-methylphenol, sowie 585,7 g Acrylsäure. Auf eine zweite Portion Katalysator wurde verzichtet. Dosierung Acrylsäure über 4 h, nach einer Nachreaktionszeit von 24 h wurde eine Säurezahl von 0,3 bestimmt.

Kennzahlen nach 24 h Lagerung bei Raumtemperatur:

| | Viskosität | Hydroxylzahl | Säurezahl | Epoxidgehalt | Farbzahl (APHA) |
|---|---|---|---|---|---|
| Vergleichs-Bsp. V2 | 80 mPas | 228 | 0,3 | 0,80% | 80 |

### Umsetzung mit Polyisocyanaten

### Vergleichsbeispiel V3:

In einem 21-Glaskolben mit Rührer und Gaseinleitung (0,3 l/h Luft) wurden 159,4 g Desmodur^{®} N3300 (Hexamethylendiisocyanat basiertes Polyisocyanat mit überwiegender Isocyanuratstruktur, NCO-Gehalt 21,8 %, Viskosität 3000 mPas/23°C, Bayer AG, Leverkusen, DE), 0,23 g 2,6-Di-tert. butyl-4-methylphenol und 25,0 g n-Butylacetat eingewogen. Anschließend wurde unter Rühren auf 60 °C aufgeheizt und 65,6 g des im Vergleichsbeispiel V2 erhaltenen Produkts (Epoxidgehalt 0,8%) innerhalb von 25 min zugegeben. Es wurde weiter bei 60°C gerührt, etwa 30 min nach Ende der Zugabe setzte eine stark exotherme Reaktion ein. Das Reaktionsgemisch heizte sich auf über 150°C auf und erstarrte zu einem sehr harten Polymerisat.

### Vergleichsbeispiele V4-V10:

In einem 21-Glaskolben mit Rührer und Gaseinleitung (0,3 l/h Luft) wurden 159,4 g Desmodur^{®} N3300 (Hexamethylendiisocyanat basiertes Polyisocyanat mit überwiegender Isocyanuratstruktur, NCO-Gehalt 21,8 %, Viskosität 3000 mPas/23°C, Bayer AG, Leverkusen, DE), 0,23 g 2,6-Di-tert. butyl-4-methylphenol und 25,0 g n-Butylacetat eingewogen. Gemäß Tabelle 3 wurde gegebenenfalls ein Stabilisator für die Isocyanatgruppen zugegeben (siehe Spalte "Stopper Vorlage"). Anschließend wurde unter Rühren auf 60 °C aufgeheizt und 65,6 g des im Vergleichsbeispiel V1 erhaltenen Produkts (Epoxidgehalt 0,6 %) innerhalb von 25 min zugegeben. Es wurde weiter bei 60°C gerührt, bis der Isocyanatgehalt einer Probe unter 9,3 % lag. Gemäß Tabelle 3 wurde gegebenenfalls ein Stabilisator für die Isocyanatgruppen zugegeben (siehe Spalte "Stopper Ende"). Die Produkte wurden in geschlossenen Glasflaschen jeweils bei Raumtemperatur und bei 60°C gelagert.

### Vergleichsbeispiel V11

Vergleichsbeispiel V4 wurde wiederholt, jedoch wurde statt des in V 1 erhaltenen Produkts jetzt 3-Acryloyloxy-2-hydroxypropyl-methacrylat (Epoxidgehalt 0,25%, Fa. Sigma-Aldrich GmbH, Steinheim, DE) verwendet.

### Vergleichsbeispiel V 12

Vergleichsbeispiel V4 wurde wiederholt, jedoch wurde statt des in V1 erhaltenen Produkts jetzt Glycerindimethacrylat (Fa. Degussa / Röhm, Darmstadt, DE) verwendet. Der Reaktionsansatz gelierte nach 2 h ohne beobachtete Exothermie.

### Beispiel 20:

Vergleichsbeispiel V4 wurde wiederholt, jedoch wurde statt des in V1 erhaltenen Produkts das Produkt aus Beispiel 17 (Epoxidgehalt 0,1%) verwendet.

**Tabelle 3:**

| Bsp. | Stopper Vorlage | Stopper Ende | RT Lagerung | 60 °C Lagerung |
|---|---|---|---|---|
| V4 | Ohne | Ohne | Nach 11 Tagen geliert | Nach 4 Tagen geliert |
| V5 | Benzoylchlorid 0,02 Gew.% | Ohne | Nach 20 Tagen geliert | Nach 4 Tagen geliert |
| V6 | Ohne | Benzoylchlorid 0,02 Gew.% | Nach 16 Tagen geliert | Nach 5 Tagen geliert |
| V7 | 4-Toluolsulfonsäure 0,02 Gew.% | Ohne | Nach 15 Tagen geliert | Nach 5 Tagen geliert |
| V8 | Ohne | 4-Toluolsulfonsäure 0,02 Gew.% | Nach 15 Tagen geliert | Nach 5 Tagen geliert |
| V9 | Dibutylphosphat 0,02 Gew.-% | Ohne | Nach 21 Tagen geliert | Nach 8 Tagen geliert |
| V10 | Ohne | Dibutylphosphat 0,02 Gew.-% | Nach 21 Tagen geliert | Nach 8 Tagen geliert |
| V11 | Ohne | Ohne | Nach 16 Tagen geliert | Nach 6 Tagen geliert |
| 20 | Ohne | Ohne | Nach 21 Tagen ohne Befund abgebrochen | Nach 21 Tagen ohne Befund abgebrochen |

### Vergleichsbeispiel 13

In einem 61-Glaskolben mit Rührer und Gaseinleitung (0,4 l/h Luft) wurden 3299 g Desmodur^{®} XP 2410 (Hexamethylendiisocyanat basiertes Polyisocyanat mit überwiegend Isocyanurat- und Iminooxadiazindion-Struktureinheiten, NCO-Gehalt 23,0 Gew.%, Viskosität 700 mPas/23°C, Bayer AG, Leverkusen, DE), 4,95 g 2,6-Di-tert.-butyl-4-methylphenol, 0,99 g Benzoylchlorid und 550 g n-Butylacetat eingewogen. Die Mischung wurde unter Rühren auf 60°C erhitzt. Bei dieser Temperatur wurden innerhalb von 6 h 1651 g des Produkts aus Vergleichsbeispiel V 1 zudosiert. Nach Ende der Dosierung wurde noch 3 h nachgerührt, bis der NCO-Gehalt bei 9,1 % lag. Es wurden weitere 4,95 g 2,6-Di-tert.-butyl-4-methylphenol eingerührt und abgekühlt.

Kennzahlen nach 24 h Lagerung bei Raumtemperatur:

| | Viskosität | Festgehalt | NCO-Gehalt | Farbzahl (APHA) |
|---|---|---|---|---|
| Vergleichs-Bsp. V13 | 2050 mPas | 89,6 % | 9,0 % | 25 |

Das Produkt wurde in geschlossenen Glasflaschen jeweils bei Raumtemperatur und bei 60°C gelagert. Binnen 8 Tagen trat in beiden Fällen Gelierung auf.

### Beispiel 21:

In einem 21-Glaskolben mit Rührer und Gaseinleitung (0,3 l/h Luft) wurden 500 g Desmodur^{®} XP 2410, 0,76 g 2,6-Di-tert.-butyl-4-methylphenol, 0,15 g Dibutylphosphat und 190 g n-Butylacetat eingewogen. Die Mischung wurde unter Rühren auf 60°C erhitzt. Bei dieser Temperatur wurden innerhalb von 2 h 260 g des Produkts aus Beispiel 19 (Epoxidgeahlt <0,1 %) zudosiert. Nach Ende der Dosierung wurde noch 9 h nachgerührt, bis der NCO-Gehalt bei 9,1 % lag.

Kennzahlen nach 24 h Lagerung bei Raumtemperatur:

| | Viskosität | Festgehalt | NCO-Gehalt | Farbzahl (APHA) |
|---|---|---|---|---|
| Beispiel 21 | 280 mPas | 79,1% | 9,1% | 50 |

Das Produkt wurde in geschlossenen Glasflaschen jeweils bei Raumtemperatur und bei 60°C gelagert. Die Lagerung wurde nach 2 Monaten abgebrochen. Beide Proben waren nicht geliert.

### Beispiel 22:

In einem 21-Glaskolben mit Rührer und Gaseinleitung (0,3 l/h Luft) wurden 665 g Desmodur^{®} Z4470 (Isophorondiisocyanat basiertes Polyisocyanat mit überwiegend Isocyanurat-Struktureinheiten, 70 %ig in n-Butylacetat, NCO-Gehalt 11,9 Gew.%, Viskosität 600 mPas/23°C, Bayer AG, Leverkusen, DE), 0,67 g 2,6-Di-tert.-butyl-4-methylphenol, 0,13 g Benzoylchlorid und 85 g n-Butylacetat eingewogen. Die Mischung wurde unter Rühren auf 60°C erhitzt. Bei dieser Temperatur wurden innerhalb von 3 h 126,2 g des Produkts aus Beispiel 18 (Epoxidgehalt 0,1 %) zudosiert. Nach Ende der Dosierung wurde noch 8 h nachgerührt, bis der NCO-Gehalt bei 5,5 % lag.

Kennzahlen nach 24 h Lagerung bei Raumtemperatur:

| | Viskosität | Festgehalt | NCO-Gehalt | Farbzahl (APHA) |
|---|---|---|---|---|
| Beispiel 22 | 650 mPas | 70,3% | 5,5% | 31 |

### Beispiel 23: (blockierter Dual Cure-Härter zur Einarbeitung in wässrige Beschichtungssysteme wie Dispersionen oder Slurries)

In einem 41-Glaskolben mit Rührer und Gaseinleitung (0,4 l/h Luft) wurden 1299,0 g Desmodur^{®} N3300, 2,48 g 2,6-Di-tert.-butyl-4-methylphenol, 0,01 g Dibutylzinndilaurat und 620,2 g 2-Butanon eingewogen. Die Mischung wurde unter Rühren auf 60°C erhitzt. Bei dieser Temperatur wurden innerhalb von 3 h portionsweise 287,8 g 3,5-Dimethylpyrazol zugegeben. Anschließend wurde ca. 2 h nachgerührt, bis ein NCO-Gehalt von 7,0 % erreicht war. Dann wurden innerhalb von 7 h 893,3 g des Produkts aus Beispiel 19 (Epoxidgehalt <0,1 %) zudosiert. Nach Ende der Dosierung wurde noch 12 h nachgerührt, bis der NCO-Gehalt unter 0,1 % lag.

Kennzahlen nach 24 h Lagerung bei Raumtemperatur:

| | Viskosität | Festgehalt | NCO-Gehalt | Farbzahl (APHA) |
|---|---|---|---|---|
| Beispiel 23 | 1300 mPas | 79,5% | <0,1 (4,0 % blockiert) | 121 |

### Beispiel 24 (blockierter und potentiell hydrophilierter Dual Cure-Härter zur Einarbeitung in wässrige Beschichtungssysteme wie Dispersionen oder Slurries)

In einem 61-Glaskolben mit Rührer und Gaseinleitung (0,5 l/h Luft) wurden 2190 g Desmodur^{®} N3300, 4,00 g 2,6-Di-tert.-butyl-4-methylphenol, 0,02 g Dibutylzinndilaurat und 1000 g Dibasischer Ester (Lösemittel der Fa. Dupont) eingewogen. Die Mischung wurde unter Rühren auf 60°C erhitzt. Bei dieser Temperatur wurden innerhalb von 3 h portionsweise 690,8 g 3,5-Dimethylpyrazol und anschließend 132,6 g Hydroxypivalinsäure zugegeben. Anschließend wurde ca. 3 h nachgerührt, bis ein NCO-Gehalt von 3,1 % erreicht war. Dann wurden innerhalb von 2 h 986,2 g des Produkts aus Beispiel 19 (Epoxidgehalt <0,1 %) zudosiert. Nach Ende der Dosierung wurde noch 12 h bei 70 °C nachgerührt, bis der NCO-Gehalt unter 0,1 % lag.

Kennzahlen nach 24 h Lagerung bei Raumtemperatur:

| | Viskosität | Festgehalt | Säurezahl | NCO-Gehalt | Farbzahl (APHA) |
|---|---|---|---|---|---|
| Beispiel 24 | 18600 mPas | 79,6 % | 10,4 | <0,1 (6,0% blockiert) | 75 |

### Beispiel 25:

(ionisch hydrophilierter Dual Cure-Härter zur Einarbeitung in wässrige 2-Komponenten-Beschichtungsmittel)

In einem 21-Glaskolben mit Rührer und Gaseinleitung (0,3 l/h Luft) wurden 474 g Desmodur^{®} XP 2410, 0,80 g 2,6-Di-tert.-butyl-4-methylphenol und 0,01 g Dibutylzinndilaurat eingewogen. Die Mischung wurde unter Rühren auf 60°C erhitzt. Bei dieser Temperatur wurden innerhalb von 2 h 326 g des Produkts aus Beispiel 17 (Epoxidgehalt 0,1 %) zudosiert. Nach Ende der Dosierung wurde noch 2 h nachgerührt, bis der NCO-Gehalt bei 7,0 % lag. Anschließend wurden 10,4 g N,N-Dimethylcyclohexylamin und dann 24,0 g N-Cyclohexyl-3-aminopropansulfonsäure zugegeben. Durch Zugabe von 200 g N-Methylpyrrolidon wurde verdünnt und noch 5 h bei 60°C nachgerührt.

Kennzahlen nach 24 h Lagerung bei Raumtemperatur:

| | Viskosität | Festgehalt | NCO-Gehalt |
|---|---|---|---|
| Beispiel 25 | 5700 mPas | 80,1% | 7,1 % |

### Anwendungstechnische Beispiele:

### Vergleichsbeispiel 26 und Beispiel 27: Herstellung von Dual Cure Klarlacken und Beschichtungen

### Zubereitung des Stammlackes V26 (Komponente A)

Zu 20,65 g Desmophen^{®} A 870 (hydroxylfunktionelles Polyacrylatpolymer, BAYER AG, Leverkusen, DE, 70 % in Butylacetat, mit einem OH-Gehalt nach DIN 53 240/2 von 3,0 %) wurden 19,27 g Desmophen^{®} VP LS 2089 (hydroxylfunktioneller Polyester, Bayer AG, Leverkusen, DE, 75 % in Butylacetat, mit einem OH-Gehalt nach DIN 53 240/2 von 6,0%), 1,31 g Tinuvin^{®} 292 (Lichtschutzmittel vom HALS-Typ, Ciba SC Inc., Basel, CH, 50 % in Butylacetat), 1,31 g Tinuvin^{®} 400 (Lichtschutzmittel, UV-Absorber, Ciba SC Inc., Basel, CH, 50 % in Butylacetat), 0,33 g Byk^{®} 306 (Verlaufsadditiv, Lösung eines polyethermodifizierten Polydimethylsiloxans, Byk Chemie GmbH, Wesel, DE, 12,5 % in Xylol/Monophenylglykol 7 / 2), 1,96 g der Mischung aus Irgacure^{®} 184 / Lucirin^{®} TPO (2:1), 50 % in Butylacetat (Irgacure^{®} 184 : Photoinitiator, 1-Hydroxycyclohexyl-phenylketon, Ciba SC Inc., Basel, CH), (Lucirin^{®} TPO : Photoinitiator, Diphenyl(2,4,6-trimethylbenzol)phosphinoxid, BASF AG, Ludwigshafen) und 15,76 g Butylacetat (Verdünnungsmittel) gegeben und innig verrührt.

### Zubereitung der Härterlösung V26 (Komponente B)

Zu 29,18 g Roskydal^{®} UA VP LS 2337 (Isocyanatgruppenhaltiges Urethanacrylat der Firma Bayer AG, Leverkusen, DE; 100 %ig, mit einem NCO-Gehalt nach DIN EN ISO 11909 von 12,8 %) wurden 10,23 g eines isocyanatgruppenhaltigen Urethanacrylats hergestellt analog Beispiel 1 der EP-A 0 928 800 auf Basis des Isophorondiisocyanat-Oligomeren Desmodur^{®} Z4470 BA (Firma Bayer AG, Leverkusen, DE, 70 %ig in Butylacetat, mit einem NCO-Gehalt nach DIN EN ISO 11909 von 11,8 %) 71,3 %ig in Butylacetat , mit einem NCO-Gehalt nach DIN EN ISO 11909 von 6,7 %) gegeben und die Mischung innig verrührt.

### Zubereitung des Stammlackes 27 (Komponente A)

Analog V26 wurden eingesetzt: 19,28 g Desmophen^{®} A 870, 18,00 g Desmophen^{®} VP LS 2089, 1,31 g Tinuvin^{®} 292 (50 % in Butylacetat, 1,31 g Tinuvin^{®} 400 (50 % in Butylacetat ), 0,33 g Byk^{®}, 1,96 g der Mischung aus Irgacure^{®} 184 / Lucirin^{®} TPO (2:1), 50 % in Butylacetat, 8,47 g Butylacetat.

### Zubereitung der Härterlösung 27 (Komponente B)

Analog V26 wurden eingesetzt: 38,58 g des in Beispiel 21 erhaltenen Dual Cure-Härters, 10,77 g eines isocyanatgruppenhaltigen Urethanacrylats auf Basis des Isophorondiisocyanat-Oligomeren Desmodur^{®} Z4470 wie bei V26 beschrieben.

### Vermischung des Stammlackes mit der Härterlösung (je V26 und 27)

Die oben aufgeführten Komponenten A und B wurden jeweils zusammengemischt und die Mischungen wurde innig verrührt. Anschließend wurden die Mischungen jeweils mit einer Luftpistole auf mit schwarzem Basislack vorbeschichtete Aluminiumbleche appliziert und diese für 5 min abgelüftet und anschließend 10 min. bei 80°C vorgetrocknet. Nach UV-Bestrahlung (Quecksilbermitteldruckstrahler, IST Metz GmbH, Nürtingen, DE, 1500 mJ/cm²) und anschließendem 20 min Einbrennen im Umluftofen bei 140°C wurden Beschichtungen mit einer Trockenfilmschichtdicke von ca. 40 µm erhalten. Für die Ermittlung der Eigenschaften der nicht UV-gehärteten Filme wurden entsprechende Beschichtungen erzeugt, die nicht UV gehärtet wurden. In jedem Fall wurden brillante, hochglänzende Beschichtungen erhalten. Eine Übersicht über die ermittelten lacktechnischen Eigenschaften der Beschichtungen enthält die folgende Tabelle.

| **Variable** | **V26** | **Beispiel 27** |
|---|---|---|
| Anlösbarkeit X/MPA/EA/AC 1 min / 5 min | 0011 / 1122 | 0000 / 0012 |
| Anlösbarkeit (ohne UV-Härtung) | 3344 / - | 3344/- |
| Pendelhärte (ohne UV-Härtung) | 100 | 132 |
| Kratzfestigkeit (bei 56 Betriebsstunden der Bürste) | | |
| Glanz 20° vor Verkratzung | 90,1 | 89,9 |
| Glanz 20° nach Verkratzung | 42,2 | 46,2 |
| Restglanz in % | 46,8% | 51,4% |
| Glanz 20° nach Reflow 2h 60°C | 65,2 | 61,9 |
| Restglanz in % | 72,4% | 68,9% |
| **Daimler-Chrysler-Gradientenofen-Test*⁾** | | |
| Baumharz | 62 | >68 |
| Bremsflüssigkeit | 36 | 36 |
| Pankreatin | 36 | 36 |
| NaOH, 1%ig | 36 | 40 |
| H₂SO₄, 1%ig | 45 | 48 |

| | | |
|---|---|---|
| *) sichtbare Schädigung nach 1 Stunde bei einer Temperatur von [°C] | | |

### Prüfmethoden:

**Anlösbarkeit:** In einem Holzständers mit 4 darin in senkrechter Lage arretierten Glasröhrchen (φ außen ca. 15mm) sind folgende Lösemittel mit zunehmender Lösekraft enthalten: 1.) Xylol (X), 2.) 1-Methoxypropylacetat-2 (MPA), 3.) Ethylacetat (EA), 4.) Aceton (AC). Sie sind mit einem Wattebausch verschlossen. Diese werden so auf den Klarlackfilm gesetzt, dass die Öffnungen der Röhrchen mit den Wattepfropfen auf dem Klarlackfilm aufliegen. Wichtig ist die vollständige Benetzung des Films mit den Lösemitteln. Nach 1 bzw. 5 Minuten werden diese Glasröhrchen entfernt und mittels eines saugfähigen Tuches die Lösemittelreste abgewischt. Die Lackoberflächen werden nach dem angegebenen Schema beurteilt.

**Die Bewertungsskala bedeutet:**
- 0:: unverändert,
- 1 :: eine Spur verändert (Quellungsring ist sehr schwach, nur durch eine Spur zu erkennen, Quellungsring ist deutlich unterbrochen),
- 2 :: gering verändert (Quellungsring ist im Licht erkennbar; Kratzspuren erkennbar),
- 3 :: mittel verändert (geschlossener Quellungsring ist deutlich erkennbar; gering ankratzbar),
- 4 :: stark verändert (geschlossener Quellungsring ist sehr stark ausgeprägt ; ankratzbar)
- 5 :: Film zerstört (stark gequollen/Kräuselung/angelöst).

### Kratzfestigkeit

Die Kratzfestigkeit wurde gemäß der DIN 55668 - Methode zur "Prüfung der Kratzfestigkeit von Beschichtungen mit einer Laborwaschanlage" bestimmt.

### Pendelhärte:

Die Pendelhärte wurde gemäß der DIN EN ISO 1522 bestimmt.

## Patentansprüche

1. Verfahren zur Herstellung von Dual Cure-Härtern durch Umsetzung mindestens eines Di- oder Polyisocyanats A mit dem Produkt B der Umsetzung von B1 Acrylsäure, Methacrylsäure und/oder dimerer Acrylsäure mit B2 Glycidylmethacrylat und/oder (Glycidylacrylat **dadurch gekennzeichnet, dass** B einen Gehalt unter 0,2 Gew.-% an Epoxidgruppen (berechnct als M = 42) aufweist.

2. Verfahren nach Anspruch 1, **dadurch gekennzeichnet, dass** die Umsetzung B1 mit B2 im Equivalentvorhältnis Säure zu Epoxid von 1,01 zu 1,20 durchgeführt wird.

3. Verfahren nach Ansprüchen 1 und 2, **dadurch gekennzeichnet, dass** die Umsetzung von B 1 mit B2 so geführt wird oder das Umsetzungsprodukt so nachbehandelt wird, dass dieses eine Säurezahl von maximal 10 mg/g KOH aufweist.

4. Verfahren nach Ansprüchen 1 bis 3, **dadurch gekennzeichnet, dass** die Umsetzung B1 mit B2 in Gegenwart eines Katalysators ausgewählt aus der Gruppe der Phosphin-, Phosphonium-, Caesium- oder Kaliumverbindungen durchgeführt wird.

5. Verfahren nach Ansprüchen 1 bis 4, **dadurch gekennzeichnet, dass** keine Reinigung durch Destillation oder destillatives Abtrennen oder Extraktion von Bestandteilen des Reaktionsgemischs erfolgt.

## Claims

1. Process for the preparation of dual-cure hardeners by reacting at least one diisocyanate or polyisocyanate A with the product B of the reaction of B1, acrylic acid, methacrylic acid and/or dimeric acrylic acid, with B2, glycidyl methacrylate and/or glycidyl acrylate, **characterized in that** B contains less than 0.2 wt.% of epoxy groups (calculated as M = 42).

2. Process according to Claim 1, **characterized in that** the reaction of B1 with B2 is carried out in an acid-to-epoxide equivalent ratio of 1.01 to 1.20.

3. Process according to Claims 1 and 2, **characterized in that** the reaction of B1 with B2 is carried out in such a way, or the reaction product is aftertreated in such a way, that the latter has an acid number of at most 10 mg/g KOH.

4. Process according to Claims 1 to 3, **characterized in that** the reaction of B1 with B2 is carried out in the presence of a catalyst selected from the group comprising phosphine, phosphonium, caesium and potassium compounds.

5. Process according to Claims 1 to 4, **characterized in that** no purification takes place by distillation or distillative separation or extraction of constituents of the reaction mixture.

## Revendications

1. Procédé pour la préparation de durcisseurs Dual Cure par réaction d'au moins un di- ou polyisocyanate A avec le produit B de la réaction de B1 acide acrylique, acide méthacrylique et/ou acide acrylique dimère avec B2 méthacrylate de glycidyle et/ou acrylate de glycidyle, **caractérisé en ce que** B présente une teneur inférieure à 0,2 % en poids de groupes époxyde (calculé comme M = 42).

2. Procédé selon la revendication 1, **caractérisé en ce que** la réaction de B1 avec B2 est réalisée avec un rapport d'équivalent acide à époxyde de 1,01 à 1,20.

3. Procédé selon les revendications 1 et 2, **caractérisé en ce que** l'on réalise la réaction de B1 avec B2 ou on traite ultérieurement le produit de la réaction de telle sorte que celui-ci présente un indice acide au maximum de 10 mg/g de KOH.

4. Procédé selon les revendications 1 à 3, **caractérisé en ce que** l'on réalise la réaction de B1 avec B2 en présence d'un catalyseur choisi dans le groupe constitué des composés de phosphine, de phosphonium, de césium ou de potassium.

5. Procédé selon les revendications 1 à 4, **caractérisé en ce que** l'on ne réalise pas de purification par distillation ou de séparation par distillation ou d'extraction des constituants du mélange réactionnel.
